# EUROPÄISCHE PATENTANMELDUNG

(11) **EP 3 428 866 A2**
(43) Veröffentlichungstag der Anmeldung: **16.01.2019**
(21) Anmeldenummer: 18179239.1
(22) Anmeldetag: 22.06.2018
(51) Int. Cl.: G06Q 20/32, G06Q 20/42

(54) **DATENÜBERTRAGUNGS- UND -VERARBEITUNGSANORDNUNG UND DATENÜBERTRAGUNGS- UND -VERARBEITUNGSVERFAHREN ZUR BEZAHLUNG EINER WARE ODER LEISTUNG**

(30) Priorität: 27.06.2017 DE 102017114275; 06.07.2017 DE 102017115074; 13.03.2018 DE 102018105757
(71) Anmelder: Rubean AG, 81379 München (DE)
(72) Erfinder: Geupel, Hermann, 81925 München (DE); Pein, Henrik, 25421 Pinneberg (DE)
(74) Vertreter: Heinze, Ekkehard

(57) **Zusammenfassung**

Datenübertragungs- und -verarbeitungsanordnung zur Bezahlung einer Ware oder Leistung an einer Ladenkasse eines Händlers durch einen Kunden, wobei die Anordnung aufweist: ein Händlergerät mit Ausrüstung zur Nahfeld-Datenkommunikation, NFC, welches einen Arbeitsspeicher zur Speicherung von Bezahldaten eines Zahlungsvorganges und eine mit dem Arbeitsspeicher sowie der Ausrüstung zur Nahfeld-Datenkommunikation zusammenwirkende erste Datenaustausch-Softwarekomponente, welche die Bezahldaten in einem standardisierten Datenaustauschformat im passiven Auslesemodus zur Verfügung stellt, sowie eine Datenschnittstelle zur aktiven Übertragung der Bezahldaten nach extern über das Internet aufweist, ein Kundengerät mit Ausrüstung zur Nahfeld-Datenübertragung, NFC, welches eine virtualisierte Bankkarte mit darin gespeicherten Bankverbindungsdaten, eine mit der Ausrüstung zur Nahfeld-Datenkommunikation zusammenwirkende zweite Datenaustausch-Softwarekomponente, welche zum aktiven Auslesen der am Händlergerät durch die erste Datenaustausch-Softwarekomponente bereitgestellten Bezahldaten ausgebildet ist, eine mit der virtualisierten Bankkarte und der zweiten Datenaustausch-Softwarekomponente zusammenwirkende Verarbeitungseinrichtung zur Erzeugung eines Bezahlauftragsdatensatzes aus den Bankverbindungsdaten und den Bezahldaten und einen Arbeitsspeicher zum Speichern des Bezahlauftragsdatensatzes sowie eine Datenschnittstelle zur drahtlosen Übertragung des Bezahlauftragsdatensatzes nach extern aufweist, und einen Zahlungsdienstleister-Server eines Zahlungsdienstleisters, der Empfangsmittel zum Empfang der Bezahldaten vom Händlergerät und des Bezahlauftragsdatensatzes vom Kundengerät und Verarbeitungsmittel zur vergleichenden Verarbeitung beider Datensätze und mit den Verarbeitungsmitteln verbundene Sendemittel zur Aussendung einer Bestätigungsnachricht an das Händlergerät zur Freigabe der Zahlung über das Internet aufweist.

## Beschreibung

Die Erfindung betrifft eine Datenübertragungs- und -verarbeitungsanordnung zur Bezahlung einer Ware oder Leistung an einer Ladenkasse eines Händlers durch einen Kunden sowie ein entsprechendes Datenübertragungs- und -verarbeitungsverfahren.

Die "elektronische" Bezahlung von Waren oder Leistungen vor Ort, also an der Ladenkasse eines Händlers, mittels einer Bank- bzw. Kreditkarte ist seit langem Standard im alltäglichen Zahlungsverkehr. In den letzten Jahren werden hierbei auch verstärkt Händlergeräte, sogenannte Point-of-Sales (PoS)-Terminals, eingesetzt, die zur Nahfeld-Datenkommunikation mit einer ebenfalls entsprechend ausgestatteten Bankkarte ausgerüstet sind.

In den letzten Jahren werden massiv Entwicklungen betrieben, bei denen in einem intelligenten Kundengerät, insbesondere einem Smartphone, eine Bankkarte in virtualisierter Form implementiert ist, so dass der Besitzer des Smartphones seine Bankverbindung allein mittels des Smartphones - also ohne Einsatz einer physischen Bankkarte - nutzen und hiermit auch Bezahlvorgänge ausführen kann.

Daneben hat das Verfahren der Nahfeld-Datenkommunikation gemäß dem NFC-Standard stetig weitere Verbreitung erlangt, auch über reine Bezahlvorgänge der oben erwähnten Art hinaus. Die Smartphones des Herstellers Apple bieten Herstellern von mobile Apps neuerdings eine Funktion an, über die das Smartphone NFC Data Exchange Format (NDEF) Daten aus anderen NFC Geräten auslesen kann. Die anderen bekannten Smartphonehersteller unterstützen dieses NFC Datenformat bereits, so dass es zur Schaffung eines neuen Bezahlprozesses, der alle gängigen Smartphones umfasst, eingesetzt werden kann.

Der Erfindung liegt die Aufgabe zu Grunde, eine auf den oben skizzierten Entwicklungen aufbauende Lösung für das Bezahlen von Waren oder Leistungen vor Ort beim Händler mittels eines geeigneten Kundengerätes anzugeben, die einfach und zugleich sicher ist und daher mit hoher Nutzerakzeptanz rechnen kann.

Diese Aufgabe wird in ihrem Vorrichtungsaspekt durch eine Anordnung mit den Merkmalen des Anspruchs 1, 2 oder 3 und in ihrem Verfahrensaspekt durch ein Verfahren mit den Merkmalen des Anspruchs 10, 11 oder 12 gelöst. Zweckmäßige Fortbildungen des Erfindungsgedankens sind Gegenstand der abhängigen Ansprüche.

Die vorliegende Erfindung zeigt eine Lösung auf, die es Mobile-App-Herstellern ermöglicht mobile Bezahllösungen für Smartphones zu entwickeln, die an gängigen Point-of-Sales (POS) Ladenkassen-Terminals akzeptiert werden.

Die vorgeschlagene Anordnung umfasst ein NFC fähiges Händlergerät, ein NFC fähiges Kundengerät und einen Server des Zahlungsdienstleisters des Händlers, wobei das NFC Händlergerät eine erste Datenaustausch-Softwarekomponente (nachfolgend auch "Software Teil 1") umfasst, die dem NFC Kundengerät die Bezahldaten im passiven NFC Modus und insbesondere NFC Data Exchange Format (NDEF) zum Auslesen zur Verfügung stellt, und das NFC Kundengerät eine zweite Datenaustausch-Softwarekomponente (nachfolgend auch "Software Teil 2") umfasst, welche die Bezahldaten im aktiven Modus einliest und als NDEF formatierte Bezahldaten interpretiert.

Das NFC Kundengerät umfasst insbesondere eine virtualisierte Bezahlkarte, welche auf dem NFC Kundengerät in Form einer Host Card Emulation (HCE) virtualisiert und durch das Whitebox Cryptography Prinzip geschützt ist.

Des Weiteren umfasst das Händlergerät Schaltmittel zur Umschaltung von einem aktiven NFC-Betriebsmodus, in dem Request-to-Answer-To-Select (RATS) Kommandos ausgesandt werden, in den passiven Auslesemodus im Ansprechen auf eine für eine vorgegebene Zeitspanne ausbleibende Answer-To-Select (ATS) Antwort des Kundengerätes. Der Zahlungsdienstleister-Server weist insbesondere Sendemittel zur Aussendung einer Zahlungsbestätigung an das Händlergerät sowie zur Aussendung einer zusätzlichen Bestätigungsnachricht an das Kundengerät über ein drahtloses Netzwerk auf.

Verfahrensaspekte der Erfindung entsprechen im Wesentlichen den Anordnungsaspekten und werden insoweit hier nicht wiederholt.

Es wird aber hingewiesen auf eine Ausführung, in der das Händlergerät vor der Bereitstellung der Bezahldaten im passiven Auslesemodus in einem aktiven NFC-Betriebsmodus RATS-Kommandos aussendet und im Ansprechen auf eine für eine vorgegebene Zeitspanne ausbleibende Antwort in den passiven Auslesemodus umschaltet. In einer Ausgestaltung ist vorgesehen, dass die Umschaltung vom aktiven NFC-Betriebsmodus in den passiven Auslesemodus und zurück zyklisch mehrmals wiederholt wird, bis das Händlergerät erkennt, in welchem NFC Modus das Kundengerät anzusprechen ist.

In einer weiteren Ausgestaltung wird die aktive Übertragung der Bezahldaten vom Händlergerät an den Zahlungsdienstleister-Server im Ansprechen darauf ausgeführt, dass das Händlergerät die Bezahldaten in einem der beiden NFC Modi mit dem Kundengerät ausgetauscht hat.

Insbesondere umfassen die Bezahldaten eine Kennung des Händlergerätes, eine Transaktionskennung und einen Zahlungsbetrag, und sie sind insbesondere durch eine Signaturkomponente im Händlergerät digital signiert.

Zur weiteren Erhöhung der Sicherheit der Datenübertragung ist vorgesehen, dass vor dem Schritt des aktiven Auslesens der Bezahldaten durch das Kundengerät und als Voraussetzung für diesen Schritt eine Legitimierung des Kunden am Kundengerät über Erfassung und Auswertung eines biometrischen Merkmals oder Eingabe und Auswertung einer PIN ausgeführt wird. Unter diesem Aspekt ist weiterhin vorgesehen, dass im Kundengerät der Bezahlauftragsdatensatz, insbesondere durch die virtualisierte Bankkarte, digital signiert wird, bevor er an den Zahlungsdienstleister-Server übertragen wird.

In einer weiteren Ausgestaltung kann neben dem oder anstelle des gewohnten, mit einem POS-Terminal verbundenen Zahlungsdienstleister-Server, in Deutschland auch Netzbetreiber-Server genannt, noch ein Online Zahlungsdienstleister Server eingebunden sein, der mit einer mobilen Online Zahlungsdienstleister App auf dem Kundengerät kommuniziert. Die Bank des an der Ladenkasse zahlenden Kunden braucht dann zur Überprüfung der Echtheit des Zahlungsauftrages nicht notwendigerweise eine oben erwähnte Bankkarten-Signatur, sondern kann die Zahlung als Lastschrift (englisch: direct debit) ausführen und dem Online Zahlungsdienstleister die Kunden-Authentifizierung überlassen, der den Kunden üblicherweise über die Online Zahlungsdienstleister App und eine Passwort- oder PIN-Eingabe bzw. ein biometrisches Merkmal authentifiziert.

Nachdem bei einer traditionellen EMV Kartentransaktion das POS-Terminal gemäß der heutigen EMV Anforderung ausschließlich im aktiven NFC-Betriebsmodus und nicht im passiven Auslesemodus geschaltet sein darf, muss der Software Teil 1 auf dem POS-Terminal außerhalb des sogenannten EMV Kernels installiert sein und kann direkt mit einem beliebigen Zahlungsdienstleister verbunden sein, der nicht notwendigerweise Netzbetreiber sein muss, sondern auch reiner Online Zahlungsdienstleister sein kann.

Wenn das Kundengerät die Bezahldaten, nachdem es diese gemäß dem erfindungsgemäßen Prinzip per NFC aus dem POS-Terminal ausgelesen hat, eigenständig über einen Zahlungsdienstleister verarbeiten soll, muss das Kundengerät über eine Onlineverbindung verfügen. Das ist an Ladenkassen nicht immer der Fall.

Eine weitere Ausgestaltung trägt dem Rechnung, indem die Bezahldaten, nachdem sie vom Kundengerät per NFC empfangen und dort vom Kunden zur Zahlung freigegeben wurden, nicht über das Kundengerät, sondern über das NFC Händlergerät zum Zahlungsdienstleister gelangen. Zur Erstellung oder Weiterleitung des Bezahlauftragsdatensatzes liest das NFC Händlergerät vorher per Bluetooth oder per WLAN Kundendaten wie eine IBAN Konto- oder eine Kartennummer bzw. den bereits erstellten Bezahlauftragsdatensatz ein. Im letzteren Fall fungiert das Händlergerät als Gateway zwischen Kundengerät und Zahlungsdienstleister-Server.

Die Kombination einer anfänglichen NFC Verbindung mit einer darauffolgenden Bluetooth Verbindung zwischen POS-Terminal und Kundengerät hat gegenüber einer reinen Bluetooth Verbindung zwischen beiden Geräten den Vorteil, dass der Kunde bei einer NFC Verbindung intuitiv die Zahlungsabsicht bekundet, indem er sein Kundengerät in kleinem Abstand an den NFC Punkt des POS-Terminals halten muss, während eine Bluetooth Verbindung ohne entsprechende Aktion des Kunden in einem Abstand von zum Beispiel 1m aufgebaut werden kann und der Kunde dann manuell das passende Händlergerät auswählen muss.

Die beiden Bluetooth bzw. WLAN Kommunikationspartner, also das Händler- und das Kundengerät, können automatisch miteinander verbunden werden, zum Beispiel dadurch, dass das Kundengerät vom Händlergerät neben den Bezahldaten auch den Bluetooth Identifizierungscode bzw. EAP (Extensible Authentication Protocol) WLAN Code des Händlergerätes empfängt und mit diesem dann zielgenau eine Bluetooth bzw. WLAN Verbindung aufbauen kann.

Die Bluetooth bzw. WLAN Zugangspasswörter zum Händlergerät können von diesem dynamisch nur für die jeweilige Session erzeugt und via NFC an das Kundengerät kommuniziert werden. Das vermeidet betrügerische Replay Angriffe.

Das NFC Händlergerät kann ein stationäres oder mobiles POS-Terminal sein. Neuerdings können auch handelsübliche Smartphones in Verbindung mit passenden Mobile Apps als mobile POS-Terminals verwendet werden.

Vorteile und Zweckmäßigkeiten der Erfindung ergeben sich im Übrigen aus der nachfolgenden skizzenartigen Beschreibung von Ausführungsbeispielen anhand der anhängigen Figuren. Von diesen zeigen:
Fig. 1 eine schematische Darstellung eines Systems und Ablaufs der erfindungsgemäßen Bezahlung an einer Ladenkasse,
Fig. 2 eine schematische Darstellung eines Systems und Ablaufs der erfindungsgemäßen Bezahlung an einer Ladenkasse anhand eines weiteren Ausführungsbeispiels,
Fig. 3 eine schematische Darstellung eines Systems und Ablaufs der erfindungsgemäßen Bezahlung an einer Ladenkasse anhand eines weiteren Ausführungsbeispiels, und
Fig. 4 eine schematische Darstellung des erfindungsgemäßen Systems und Ablaufs unter Anwendung einer zusätzlichen Bluetooth oder WLAN Verbindung

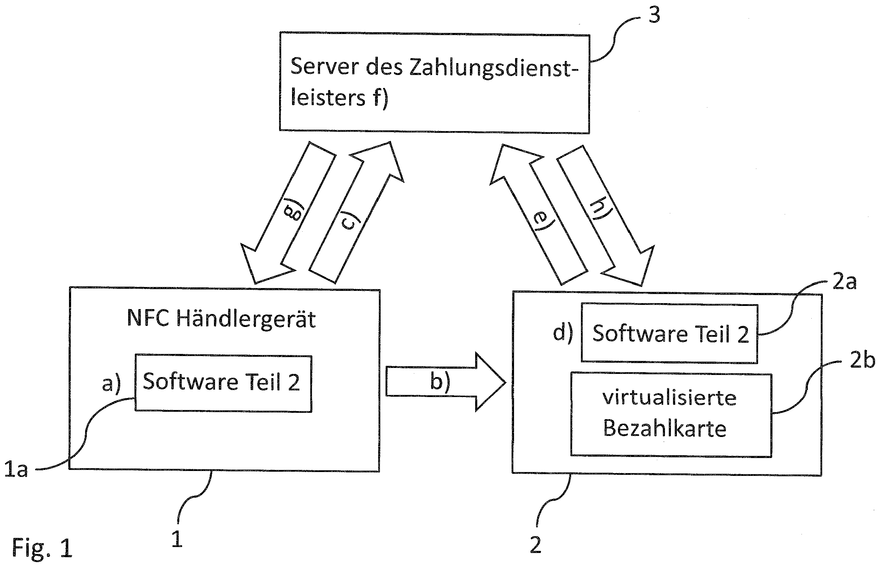

Die Anordnung umfasst gemäß Figur 1, die als kombiniertes Blockschaltbild und Flussdiagramm zu verstehen ist, ein NFC-fähiges Händlergerät 1, ein NFC-fähiges Kundengerät 2 und einen Zahlungsdienstleister-Server 3. Für die nachfolgende beispielhafte Erläuterung sind im NFC-Händlergerät 1 lediglich eine Software Teil 1 mit Ziffer 1a und im NFC-Kundengerät 2 eine Software Teil 2 mit Ziffer 2a und eine virtualisierte Bezahlkarte mit Ziffer 2b gesondert bezeichnet. Die weiteren in den Ansprüchen genannten Funktionseinheiten der Anordnungskomponenten sind hingegen zur Vereinfachung weggelassen; es wird auch ausdrücklich darauf hingewiesen, dass Ausführungen der Erfindung möglich sind, bei denen nicht sämtliche dieser Funktionseinheiten zwingend vorhanden sind.

Zu Beginn des Bezahlvorganges zeigt das Händlergerät 1 auf einem entsprechenden Display einen Zahlungsbetrag an und hält hierbei intern einen Bezahldatensatz bereit. Wenn das Händlergerät die Annäherung des NFC-Kundengerätes 2 (speziell durch Änderung der erfassen elektromagnetischen Feldstärke) erkennt, sendet es im aktiven NFC-Modus das übliche RATS-Kommando zur Verbindungsaufnahme, welches insbesondere mit einem passiven NFC-Kommunikationspartner definiert ist.
a) Wenn das NFC Händlergerät 1 in einer bestimmten Zeit keine Antwort vom NFC Kundengerät 2 zurückerhält, wechselt es, gesteuert durch die Software Teil 1 in den passiven NFC Modus und stellt dem NFC Kundengerät 2 die Bezahldaten im NDEF-Format zur Verfügung.
b) Das an das NFC Händlergerät 1 gehaltene NFC Kundengerät 2 ruft, durch die Software Teil 2 gesteuert im aktiven NFC Modus die Bezahldaten vom NFC Händlergerät 1 ab.
c) Nachdem das NFC Händlergerät 1 erkannt hat, dass das NFC Kundengerät 2 die Bezahldaten ausgelesen hat, schickt das NFC Händlergerät 1 die Bezahldaten parallel an den Server 3 des angeschlossenen Zahlungsdienstleisters und fragt um eine Rückantwort an.
d) Das NFC Kundengerät 2 erzeugt in der Software Teil 2 auf Basis der Bezahldaten einen Bezahlauftragsdatensatz
e) und sendet diesen an den Server 3 des Zahlungsdienstleisters.
f) Der Server 3 des Zahlungsdienstleisters prüft die Daten vom NFC Kundengerät 2 auf Konsistenz mit denen, die er vom NFC Händlergerät 1 bekommen hat, und prüft die Freigabe der Zahlung.
g) Der Server 3 des Zahlungsdienstleisters versendet schließlich eine Bestätigungsnachricht an das NFC Händlergerät 1.

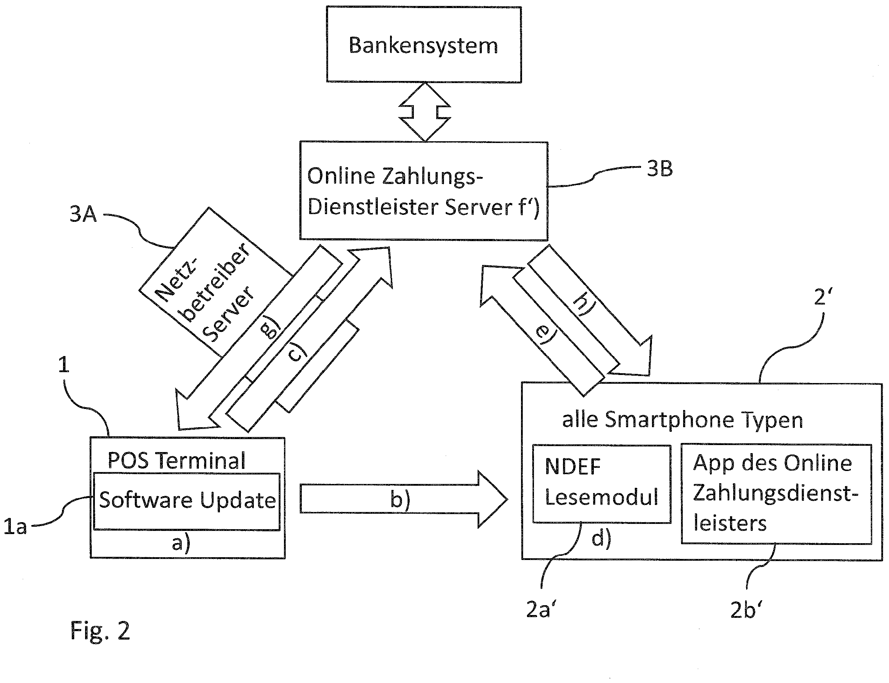

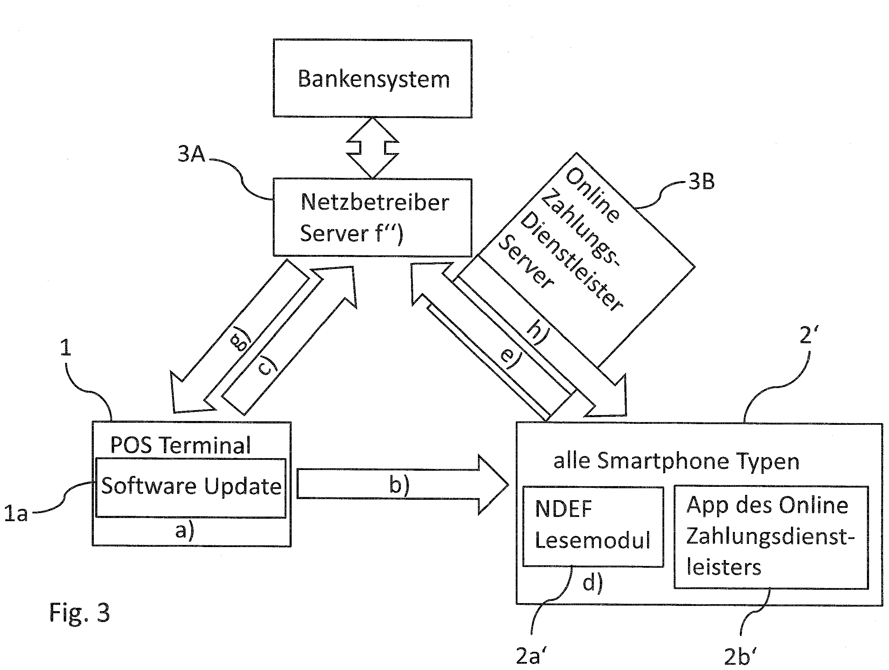

Die Figuren 2 und 3 zeigen in analogen synoptischen Darstellungen wie Fig. 1 die Einbindung eines Online Zahlungsdienstleisters wie zum Beispiel paydirekt oder Paypal, zusätzlich zum Zahlungsdienstleister, der mit dem Händlergerät verbunden ist und in Deutschland Netzbetreiber genannt wird. Soweit die Systemkomponenten und Schritte mit denen aus Fig. 1 übereinstimmen oder diesen funktional entsprechen, wurden die gleichen Bezugszeichen wie dort verwendet.

Bei der Anordnung nach Fig. 2 treten an die Stelle des dortigen Servers 3 des Zahlungsdienstleisters ein Server 3A eines Netzbetreibers und ein Server 3B eines Online-Zahlungsdienstleisters, der letztlich in Verbindung mit einem (nicht gesondert bezeichneten) Bankensystem steht. Abweichend von der in Fig. 1 gezeigten inneren Funktionalität ist im Kundengerät 2', als das praktisch sämtliche marktgängigen Smartphone-Typen genutzt werden können, ein standardisierter NDEF-Lesemodus 2A' implementiert, und die erfindungswesentlichen Gerätefunktionen basieren auf einer in das Smartphone geladenen App 2b', die vom Online-Zahlungsdienstleister bereitgestellt wird.

Gemäß Fig. 2 prüft der Online Zahlungsdienstleister-Server 3B in Schritt f') die Zahlungsfreigabe gegen das Bankensystem und der Netzbetreiber-Server 3A fungiert als Kommunikationskanal zum Händlergerät 1. Im Übrigen wird hinsichtlich der Verfahrensschritte gemäß Fig. 2 auf Anspruch 10 hingewiesen.

Bei der Anordnung und dem Verfahren nach Fig. 3 ist der Server 3A des Netzbetreibers direkt in Verbindung mit dem Bankensystem, und der Server 3B des Online-Zahlungsdienstleisters "steht" zwischen dem Server 3A des Netzbetreibers und dem Kundengerät 2'.

Gemäß Fig. 3 prüft der Netzbetreiber-Server 3A in Schritt f") die Zahlungsfreigabe gegen das Bankensystem, und der Online Zahlungsdienstleister-Server 3B fungiert als Kommunikationskanal zum Smartphone. Soweit die Systemkomponenten und Schritte mit denen aus Fig. 1 übereinstimmen oder diesen funktional entsprechen, wurden die gleichen Bezugszeichen wie dort verwendet. Im Übrigen wird hinsichtlich der Verfahrensschritte gemäß Fig. 3 auf Anspruch 11 hingewiesen.

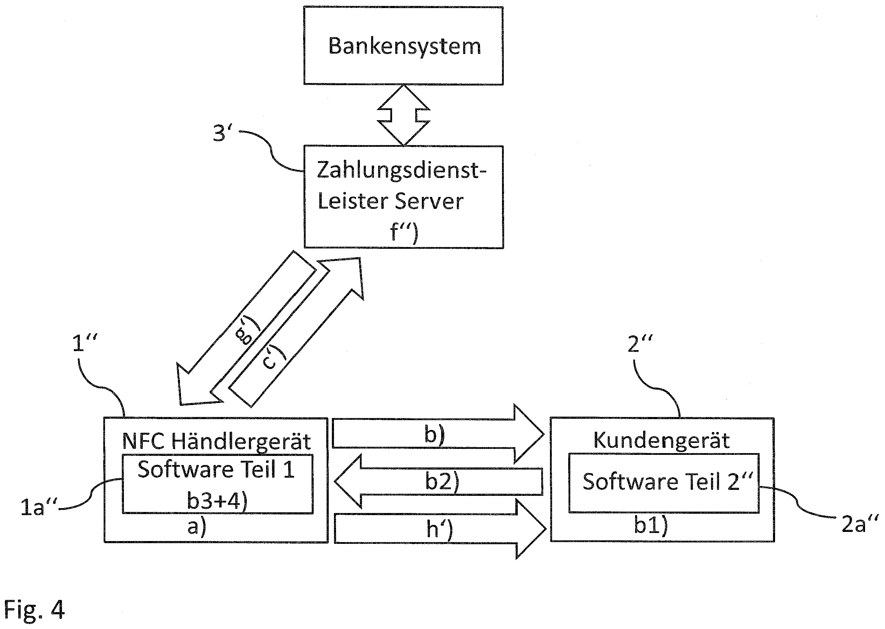

Figur 4 zeigt eine Anordnung und ein Verfahren, mit denen das Kundengerät zur Durchführung der Transaktion nicht online sein muss.
a) Wenn das NFC Händlergerät 1" in einer bestimmten Zeit keine Antwort vom NFC Kundengerät 2" zurückerhält, wechselt es, gesteuert durch die Software Teil 1A" in den passiven NFC Modus und stellt dem NFC Kundengerät 2" die Bezahldaten und eigenen Bluetooth oder WLAN Zugangskoordinaten im NDEF-Format zur Verfügung.
b) Das an das NFC Händlergerät 1" gehaltene NFC Kundengerät 2" ruft, durch die Software Teil 2A" gesteuert im aktiven NFC Modus die Bezahldaten und den Bluetooth bzw. WLAN Zugangskoordinaten vom NFC Händlergerät 1" ab und lässt die Bezahlung durch den Kunden freigeben, zum Beispiel in Form eines Fingerabdruckes.
b1) Die Software Teil 2A" erzeugt aus den empfangenen Bezahldaten und im Software Teil 2A" gespeicherten, zahlungsbezogenen Kundenidentifizierungsdaten, zum Beispiel der IBAN Kontonummer oder einer EMV Kartennummer des Kunden, einen Bezahlauftragsdatensatz.
   Alternativ dazu kann der Bezahlauftragsdatensatz auch in einem späteren Schritt b3) im Software Teil 1" des Händlergerätes aus den dort vorhandenen Bezahldaten und in Schritt b2) übertragenen Kundenidentifizierungsdaten zusammengesetzt werden.
b2) Mit den Bluetooth bzw. WLAN Zugangskoordinaten des NFC Händlergeräts 1" baut das Kundengerät 2" eine Bluetooth bzw. WLAN Verbindung mit dem Händlergerät 1" auf und überträgt, durch die Software Teil 2A" gesteuert entweder einen in Schritt b1) bereits erzeugten Bezahlauftragsdatensatz oder Kundenidentifizierungsdaten zur Bildung desselben an das NFC Händlergerät 1".
b3) Das NFC Händlergerät 1" verwendet entweder den empfangenen Bezahlauftragsdatensatz oder erzeugt in der Software Teil 1A" auf Basis der Bezahldaten und den Kundenidentifizierungsdaten selbst einen Bezahlauftragsdatensatz.
b4) Das NFC Händlergerät speichert den Bezahlauftragsdatensatz in einem Arbeitsspeicher des Händlergerätes zwischen
c') und sendet ihn an den Server 3' des Zahlungsdienstleisters.
f") Der Server 3 des Zahlungsdienstleisters prüft die Freigabe der Zahlung
g') und versendet schließlich eine Bestätigungsnachricht an das NFC Händlergerät 1".
h') Das NFC Händlergerät 1" leitet die Bestätigungsnachricht per Bluetooth oder WLAN an das Kundengerät 2" weiter.

Im Übrigen ist die Ausführung der Erfindung auch in einer Vielzahl von Abwandlungen der hier gezeigten Beispiele und weiter oben hervorgehobenen Aspekte der Erfindung möglich.

### Aspekte der Erfindung:

Gemäß einem Aspekt der Erfindung ist vorgesehen, dass die erste und zweite Datenaustausch-Softwarekomponente zur Handhabung der Bezahldaten im Data Exchange Format, NDEF, ausgebildet sind.

Gemäß einem weiteren Aspekt der Erfindung ist vorgesehen, dass das Händlergerät ein Point-of-Sales, PoS, Terminal, und das Kundengerät ein Smartphone ist.

Gemäß einem weiteren Aspekt der Erfindung ist vorgesehen, dass die virtualisierte Bankkarte auf dem Kundengerät in Form einer Host Card Emulation, HCE, virtualisiert und mittels des Whitebox Cryptography Prinzips geschützt ist.

Gemäß einem weiteren Aspekt der Erfindung ist vorgesehen, dass der Zahlungsdienstleister-Server Sendemittel zur Aussendung einer zusätzlichen Bestätigungsnachricht an das Kundengerät über ein drahtloses Netzwerk aufweist.

Gemäß einem weiteren Aspekt der Erfindung ist vorgesehen, dass das Händler- und das Kundengerät über Mittel verfügen, die eine gegenseitige Bluetooth Kommunikation ermöglicht.

Gemäß einem weiteren Aspekt der Erfindung ist vorgesehen, dass die Bezahldaten eine Kennung des Händlergerätes, eine Transaktionskennung und einen Zahlungsbetrag umfassen und insbesondere durch eine Signaturkomponente im Händlergerät digital signiert sind.

Gemäß einem weiteren Aspekt der Erfindung ist vorgesehen, dass vor dem Schritt des aktiven Auslesens der Bezahldaten durch das Kundengerät und als Voraussetzung für diesen Schritt eine Legitimierung des Kunden am Kundengerät über Erfassung und Auswertung eines biometrischen Merkmals oder Eingabe und Auswertung einer PIN ausgeführt wird.

Gemäß einem weiteren Aspekt der Erfindung ist vorgesehen, dass im Kundengerät der Bezahlauftragsdatensatz, insbesondere durch die virtualisierte Bankkarte, digital signiert wird, bevor er an den Zahlungsdienstleister-Server übertragen wird.

Gemäß einem weiteren Aspekt der Erfindung ist vorgesehen, dass der Zahlungsdienstleister-Server die Zahlungsbestätigung über Sendemittel zur Übertragung über ein drahtloses Netzwerk auch an das Kundengerät sendet.

Gemäß einem weiteren Aspekt der Erfindung ist vorgesehen, dass die zahlungsbezogenen Kundenidentifizierungsdaten eine Bankkonto- oder eine EMV Kartennummer ist.

Gemäß einem weiteren Aspekt der Erfindung ist vorgesehen, dass die alternative Drahtlosverbindung, die in Schritt b2) durch das Kundengerät mit dem Händlergerät aufgebaut wird, eine Bluetooth oder eine WLAN Verbindung ist.

## Patentansprüche

1. Datenübertragungs- und -verarbeitungsanordnung zur Bezahlung einer Ware oder Leistung an einer Ladenkasse eines Händlers durch einen Kunden, wobei die Anordnung aufweist:
- ein Händlergerät mit Ausrüstung zur Nahfeld-Datenkommunikation, NFC, welches einen Arbeitsspeicher zur Speicherung von Bezahldaten eines Zahlungsvorganges und eine mit dem Arbeitsspeicher sowie der Ausrüstung zur Nahfeld-Datenkommunikation zusammenwirkende erste Datenaustausch-Softwarekomponente, welche die Bezahldaten in einem standardisierten Datenaustauschformat im passiven Auslesemodus zur Verfügung stellt, sowie eine Datenschnittstelle zur aktiven Übertragung der Bezahldaten nach extern über das Internet aufweist,
- ein Kundengerät mit Ausrüstung zur Nahfeld-Datenübertragung, NFC, welches eine virtualisierte Bankkarte mit darin gespeicherten Bankverbindungsdaten, eine mit der Ausrüstung zur Nahfeld-Datenkommunikation zusammenwirkende zweite Datenaustausch-Softwarekomponente, welche zum aktiven Auslesen der am Händlergerät durch die erste Datenaustausch-Softwarekomponente bereitgestellten Bezahldaten ausgebildet ist, eine mit der virtualisierten Bankkarte und der zweiten Datenaustausch-Softwarekomponente zusammenwirkende Verarbeitungseinrichtung zur Erzeugung eines Bezahlauftragsdatensatzes aus den Bankverbindungsdaten und den Bezahldaten und einen Arbeitsspeicher zum Speichern des Bezahlauftragsdatensatzes sowie eine Datenschnittstelle zur drahtlosen Übertragung des Bezahlauftragsdatensatzes nach extern aufweist, und
- einen Zahlungsdienstleister-Server eines Zahlungsdienstleisters, der Empfangsmittel zum Empfang der Bezahldaten vom Händlergerät und des Bezahlauftragsdatensatzes vom Kundengerät und Verarbeitungsmittel zur vergleichenden Verarbeitung beider Datensätze und mit den Verarbeitungsmitteln verbundene Sendemittel zur Aussendung einer Bestätigungsnachricht an das Händlergerät zur Freigabe der Zahlung über das Internet aufweist.

2. Datenübertragungs- und -verarbeitungsanordnung zur Bezahlung einer Ware oder Leistung an einer Ladenkasse eines Händlers durch einen Kunden, wobei die Anordnung aufweist:
- ein Händlergerät mit Ausrüstung zur Nahfeld-Datenkommunikation, NFC, welches einen Arbeitsspeicher zur Speicherung von Bezahldaten eines Zahlungsvorganges und eine mit dem Arbeitsspeicher sowie der Ausrüstung zur Nahfeld-Datenkommunikation zusammenwirkende erste Datenaustausch-Softwarekomponente, welche die Bezahldaten in einem standardisierten Datenaustauschformat im passiven Auslesemodus zur Verfügung stellt, sowie eine Datenschnittstelle zur aktiven Übertragung der Bezahldaten nach extern über das Internet aufweist,
- ein Kundengerät mit Ausrüstung zur Nahfeld-Datenübertragung, NFC, welches eine mobile App mit darin gespeicherten Bankverbindungsdaten, eine mit der Ausrüstung zur Nahfeld-Datenkommunikation zusammenwirkende zweite Datenaustausch-Softwarekomponente, welche zum aktiven Auslesen der am Händlergerät durch die erste Datenaustausch-Softwarekomponente bereitgestellten Bezahldaten ausgebildet ist, eine mit der mobilen App und der zweiten Datenaustausch-Softwarekomponente zusammenwirkende Verarbeitungseinrichtung zur Erzeugung eines Bezahlauftragsdatensatzes aus den Bankverbindungsdaten und den Bezahldaten und einen Arbeitsspeicher zum Speichern des Bezahlauftragsdatensatzes sowie eine Datenschnittstelle zur drahtlosen Übertragung des Bezahlauftragsdatensatzes nach extern aufweist,
- einen Netzbetreiber-Server eines Betreibers eines Kommunikationsnetzwerks und
- einen Online-Zahlungsdienstleister-Server eines Online-Zahlungsdienstleisters, wobei der Netzbetreiber-Sever Empfangsmittel zum Empfang der Bezahldaten vom Händlergerät, Sendemittel zum Weiterleiten der Bezahldaten an den Online Zahlungsdienstleister-Server, Empfangsmittel zum Empfang der Bestätigungsnachricht über die Zahlungsfreigabe vom Online Zahlungsdienstleister-Server und Sendemittel zur Weiterleitung der Bestätigungsnachricht an das Händlergerät aufweist, und
wobei der Online-Zahlungsdienstleister-Server Empfangsmittel zum Empfang des Bezahlauftragsdatensatzes vom Kundengerät, Empfangsmittel zum Empfang der Bezahldaten vom Netzbetreiber-Server, Verarbeitungsmittel zur vergleichenden Verarbeitung der beiden vom Händler- und Kundengerät empfangenen Datensätze, Prüfmittel zum Prüfen der Zahlungsfreigabe und mit den Prüfmitteln verbundene Sendemittel zur Aussendung einer Bestätigungsnachricht über die Zahlungsfreigabe an den Netzbetreiber-Server und das Kundengerät aufweist.

3. Datenübertragungs- und -verarbeitungsanordnung zur Bezahlung einer Ware oder Leistung an einer Ladenkasse eines Händlers durch einen Kunden, wobei die Anordnung aufweist:
- ein Händlergerät mit Ausrüstung zur Nahfeld-Datenkommunikation, NFC, welches einen Arbeitsspeicher zur Speicherung von Bezahldaten eines Zahlungsvorganges und eine mit dem Arbeitsspeicher sowie der Ausrüstung zur Nahfeld-Datenkommunikation zusammenwirkende erste Datenaustausch-Softwarekomponente, welche die Bezahldaten in einem standardisierten Datenaustauschformat im passiven Auslesemodus zur Verfügung stellt, sowie eine Datenschnittstelle zur aktiven Übertragung der Bezahldaten nach extern über das Internet aufweist,
- ein Kundengerät mit Ausrüstung zur Nahfeld-Datenübertragung, NFC, welches eine mobile App mit darin gespeicherten Bankverbindungsdaten, eine mit der Ausrüstung zur Nahfeld-Datenkommunikation zusammenwirkende zweite Datenaustausch-Softwarekomponente, welche zum aktiven Auslesen der am Händlergerät durch die erste Datenaustausch-Softwarekomponente bereitgestellten Bezahldaten ausgebildet ist, eine mit der mobilen App und der zweiten Datenaustausch-Softwarekomponente zusammenwirkende Verarbeitungseinrichtung zur Erzeugung eines Bezahlauftragsdatensatzes aus den Bankverbindungsdaten und den Bezahldaten und einen Arbeitsspeicher zum Speichern des Bezahlauftragsdatensatzes sowie eine Datenschnittstelle zur drahtlosen Übertragung des Bezahlauftragsdatensatzes nach extern aufweist,
- einen Netzbetreiber-Server eines Betreibers eines Kommunikationsnetzwerks und
- einen Online-Zahlungsdienstleister-Server eines Online-Zahlungsdienstleisters, wobei der Netzbetreiber-Sever Empfangsmittel zum Empfang der Bezahldaten vom Händlergerät, Empfangsmittel zum Empfang des Bezahlauftragsdatensatzes vom Zahlungsdienstleister-Server, Verarbeitungsmittel zur vergleichenden Verarbeitung der beiden vom Händler- und Kundengerät empfangene Datensätze, Prüfmittel zum Prüfen der Zahlungsfreigabe und mit den Prüfmitteln verbundene Sendemittel zur Aussendung einer Bestätigungsnachricht über die Zahlungsfreigabe an das Händlergerät und den Online Zahlungsdienstleister-Server aufweist, und
wobei der Online-Zahlungsdienstleister-Server Empfangsmittel zum Empfang des Bezahlauftragsdatensatzes vom Kundengerät, Sendemittel zum Weiterleiten der Bezahldaten an den Netzbetreiber-Server, Empfangsmittel zum Empfang der Bestätigungsnachricht über die Zahlungsfreigabe vom Netzbetreiber-Server und Sendemittel zur Weiterleitung der Bestätigungsnachricht an das Kundengerät aufweist.

4. Datenübertragungs- und -verarbeitungsanordnung nach einem der vorangehenden Ansprüche, wobei der Online Zahlungsdienstleister-Server die erfindungsgemäßen Funktionen des Netzbetreiber-Servers übernimmt und diesen damit ersetzt.

5. Datenübertragungs- und -verarbeitungsanordnung nach einem der vorangehenden Ansprüche, wobei das Händlergerät Schaltmittel zur Umschaltung von einem aktiven NFC-Betriebsmodus, in dem ein Request-to-Answer-To-Select (RATS) Kommando ausgesandt wird, in den passiven Auslesemodus aufweist, im Ansprechen auf eine für eine vorgegebene Zeitspanne ausbleibende Answer-To-Select (ATS) Antwort.

6. Datenübertragungs- und -verarbeitungsverfahren zur Bezahlung einer Ware oder Leistung an einer Ladenkasse eines Händlers durch einen Kunden, wobei das Verfahren aufweist:
- Bereitstellung von Bezahldaten eines Zahlungsvorganges in einem Arbeitsspeicher eines Händlergerätes,
- Bereitstellung der Bezahldaten in einem standardisierten Datenaustauschformat im passiven Auslesemodus einer Nahfeld-Datenkommunikation, NFC, durch eine mit dem Arbeitsspeicher sowie einer Ausrüstung zur Nahfeld-Datenkommunikation zusammenwirkende erste Datenaustausch-Softwarekomponente im Händlergerät,
- Bereitstellung von Bankverbindungsdaten durch eine virtualisierte Bankkarte in einem Kundengerät,
- aktives Auslesen der am Händlergerät bereitgestellten Bezahldaten durch eine mit einer Ausrüstung zur Nahfeld-Datenübertragung, NFC, des Kundengerätes zusammenwirkende zweite Datenaustausch-Softwarekomponente im Kundengerät,
- Verarbeitung der Bankverbindungsdaten und der Bezahldaten durch eine mit der virtualisierten Bankkarte und der zweiten Datenaustausch-Softwarekomponente zusammenwirkende Verarbeitungseinrichtung und Erzeugung eines Bezahlauftragsdate nsatzes,
- Zwischenspeicherung des Bezahlauftragsdatensatzes in einem Arbeitsspeicher des Kundengerätes,
- aktive Übertragung der Bezahldaten durch das Händlergerät an einen Zahlungsdienstleister-Server eines Zahlungsdienstleisters über eine Datenschnittstelle des Händlergerätes und das Internet,
- aktive drahtlose Übertragung des Bezahlauftragsdatensatzes an den Zahlungsdienstleister-Server durch das Kundengerät über dessen Datenschnittstelle,
- Empfang der Bezahldaten vom Händlergerät und des Bezahlauftragsdatensatzes vom Kundengerät durch den Zahlungsdienstleiser-Server,
- vergleichende Verarbeitung der Bezahldaten und des Bezahlauftragsdatensatzes in Verarbeitungsmitteln des Zahlungsdienstleister-Servers und
- Aussendung einer Bestätigungsbericht zur Freigabe der Zahlung an das Händlergerät über Sendemittel des Zahlungsdienstleister-Servers und über das Internet.

7. Datenübertragungs- und -verarbeitungsverfahren zur Bezahlung einer Ware oder Leistung an einer Ladenkasse eines Händlers durch einen Kunden, wobei das Verfahren aufweist:
- Bereitstellung von Bezahldaten eines Zahlungsvorganges in einem Arbeitsspeicher eines Händlergerätes,
- Bereitstellung der Bezahldaten in einem standardisierten Datenaustauschformat im passiven Auslesemodus einer Nahfeld-Datenkommunikation, NFC, durch eine mit dem Arbeitsspeicher sowie einer Ausrüstung zur Nahfeld-Datenkommunikation zusammenwirkende erste Datenaustausch-Softwarekomponente im Händlergerät,
- Bereitstellung von Bankverbindungsdaten durch eine mobile App in einem Kundengerät,
- aktives Auslesen der am Händlergerät bereitgestellten Bezahldaten durch eine mit einer Ausrüstung zur Nahfeld-Datenübertragung, NFC, des Kundengerätes zusammenwirkende zweite Datenaustausch-Softwarekomponente im Kundengerät,
- Verarbeitung der Bankverbindungsdaten und der Bezahldaten durch eine mit der mobile App und der zweiten Datenaustausch-Softwarekomponente zusammenwirkende Verarbeitungseinrichtung und Erzeugung eines Bezahlauftragsdatensatzes,
- Zwischenspeicherung des Bezahlauftragsdatensatzes in einem Arbeitsspeicher des Kundengerätes,
- aktive Übertragung der Bezahldaten durch das Händlergerät an einen Netzbetreiber-Server über eine Datenschnittstelle des Händlergerätes und das Internet,
- Weiterleitung der Bezahldaten vom Netzbetreiber-Server an einen Online Zahlungsdienstleister-Server
- aktive drahtlose Übertragung des Bezahlauftragsdatensatzes durch das Kundengerät über dessen Datenschnittstelle an den Online Zahlungsdienstleister-Server,
- Empfang der Bezahldaten vom Netzbetreiber-Server und des Bezahlauftragsdatensatzes vom Kundengerät durch den Online Zahlungsdienstleister-Server,
- vergleichende Verarbeitung der Bezahldaten und des Bezahlauftragsdatensatzes in Verarbeitungsmitteln des Online Zahlungsdienstleister-Servers
- Prüfen der Zahlungsfreigabe mit Prüfmitteln des Online Zahlungsdienstleister-Servers,
- Aussendung einer Bestätigungsbericht zur Freigabe der Zahlung an das Kundengerät und an den Netzbetreiber-Server über Sendemittel des Online Zahlungsdienstleister-Servers und über das Internet
- Weiterleiten der Bestätigungsnachricht vom Netzbetreiber-Server an das Händlergerät

8. Datenübertragungs- und -verarbeitungsverfahren zur Bezahlung einer Ware oder Leistung an einer Ladenkasse eines Händlers durch einen Kunden, wobei das Verfahren aufweist:
- Bereitstellung von Bezahldaten eines Zahlungsvorganges in einem Arbeitsspeicher eines Händlergerätes,
- Bereitstellung der Bezahldaten in einem standardisierten Datenaustauschformat im passiven Auslesemodus einer Nahfeld-Datenkommunikation, NFC, durch eine mit dem Arbeitsspeicher sowie einer Ausrüstung zur Nahfeld-Datenkommunikation zusammenwirkende erste Datenaustausch-Softwarekomponente im Händlergerät,
- Bereitstellung von Bankverbindungsdaten durch eine mobile App in einem Kundengerät,
- aktives Auslesen der am Händlergerät bereitgestellten Bezahldaten durch eine mit einer Ausrüstung zur Nahfeld-Datenübertragung, NFC, des Kundengerätes zusammenwirkende zweite Datenaustausch-Softwarekomponente im Kundengerät,
- Verarbeitung der Bankverbindungsdaten und der Bezahldaten durch eine mit der mobile App und der zweiten Datenaustausch-Softwarekomponente zusammenwirkende Verarbeitungseinrichtung und Erzeugung eines Bezahlauftragsdatensatzes,
- Zwischenspeicherung des Bezahlauftragsdatensatzes in einem Arbeitsspeicher des Kundengerätes,
- aktive Übertragung der Bezahldaten durch das Händlergerät an einen Netzbetreiber-Server über eine Datenschnittstelle des Händlergerätes und das Internet,
- aktive drahtlose Übertragung des Bezahlauftragsdatensatzes durch das Kundengerät über dessen Datenschnittstelle an den Online Zahlungsdienstleister-Server,
- Weiterleitung des Bezahlauftragsdatensatzes vom Online Zahlungsdienstleister-Server an den Netzbetreiber-Server
- Empfang der Bezahldaten vom Händlergerät und des Bezahlauftragsdatensatzes vom Online Zahlungsdienstleister-Server durch den Netzbetreiber-Server,
- vergleichende Verarbeitung der Bezahldaten und des Bezahlauftragsdatensatzes in Verarbeitungsmitteln des Netzbetreiber-Servers
- Prüfen der Zahlungsfreigabe mit Prüfmitteln des Netzbetreiber-Servers,
- Aussendung einer Bestätigungsbericht zur Freigabe der Zahlung an das Händlergerät und an den Online Zahlungsdienstleister-Server über Sendemittel des Netzbetreiber-Servers und über das Internet
- Weiterleiten der Bestätigungsnachricht vom Online Zahlungsdienstleister-Server an das Kundengerät

9. Datenübertragungs- und -verarbeitungsverfahren nach einem der Ansprüche 6 bis 8, wobei der Online Zahlungsdienstleister-Server die erfindungsgemäßen Funktionen des Netzbetreiber-Servers übernimmt und diesen damit ersetzt.

10. Datenübertragungs- und -verarbeitungsverfahren nach einem der Ansprüche 6 bis 9, wobei das Händlergerät vor der Bereitstellung der Bezahldaten im passiven Auslesemodus in einem aktiven NFC-Betriebsmodus ein Request-to-Answer-To-Select (RATS) Kommandos aussendet und im Ansprechen auf eine für eine vorgegebene Zeitspanne ausbleibende Answer-To-Select (ATS) Antwort in den passiven Auslesemodus umschaltet.

11. Datenübertragungs- und -verarbeitungsverfahren nach Anspruch 10, wobei die Umschaltung vom aktiven NFC-Betriebsmodus in den passiven Auslesemodus und zurück zyklisch mehrmals wiederholt wird, bis das Händlergerät erkennt, in welchem NFC Modus das Kundengerät anzusprechen ist.

12. Datenübertragungs- und -verarbeitungsverfahren nach einem der Ansprüche 6 bis 11, wobei die Bereitstellung der Bezahldaten durch das Händlergerät und das aktive Auslesen durch das Kundengerät im Data Exchange-Format, NDEF, ausgeführt wird.

13. Datenübertragungs- und -verarbeitungsverfahren nach einem der Ansprüche 6 bis 12, wobei die aktive Übertragung der Bezahldaten vom Händlergerät an den Zahlungsdienstleister-Server im Ansprechen darauf ausgeführt wird, dass das Händlergerät die Bezahldaten in einem der beiden NFC Modi mit dem Kundengerät ausgetauscht hat.

14. Datenübertragungs- und -verarbeitungsverfahren zur Bezahlung einer Ware oder Leistung an einer Ladenkasse eines Händlers durch einen Kunden, wobei das Verfahren aufweist:
a) Bereitstellung von Bezahldaten eines Zahlungsvorganges in einem Arbeitsspeicher eines Händlergerätes, in Form eines standardisierten Datenaustauschformats im passiven Auslesemodus einer Nahfeld-Datenkommunikation, NFC, durch eine mit dem Arbeitsspeicher sowie einer Ausrüstung zur Nahfeld-Datenkommunikation zusammenwirkenden ersten Datenaustausch-Softwarekomponente im Händlergerät,
und Bereitstellung von zahlungsbezogenen Kundenidentifizierungsdaten durch eine mobile App in einem Kundengerät,
b) aktives Auslesen der am Händlergerät bereitgestellten Bezahldaten und von Zugangsdaten des Händlergerätes für eine alternative Drahtlosverbindung durch eine mit einer Ausrüstung zur Nahfeld-Datenübertragung, NFC, des Kundengerätes zusammenwirkende zweite Datenaustausch-Softwarekomponente im Kundengerät,
b1) Verarbeitung der zahlungsbezogenen Kundenidentifizierungsdaten und der Bezahldaten durch eine mit der mobile App und der zweiten Datenaustausch-Softwarekomponente zusammenwirkende Verarbeitungseinrichtung und Erzeugung eines Bezahlauftragsdatensatzes,
b2) Aufbau einer zur NFC Verbindung alternativen Drahtlosverbindung durch das Kundengerät mit dem Händlergerät unter Verwendung der Zugangsdaten des Händlergerätes und Übertragung des Bezahlauftragsdatensatzes vom Kundengerät an das Händlergerät,
b4) Zwischenspeicherung des Bezahlauftragsdatensatzes in einem Arbeitsspeicher des Händlergerätes,
c') aktive Übertragung des Bezahlauftragsdatensatzes durch das Händlergerät über das Internet an einen Zahlungsdienstleister-Server,
f") Empfang des Bezahlauftragsdatensatzes durch den Zahlungsdienstleister-Server und Prüfen der Zahlungsfreigabe mit Prüfmitteln des Zahlungsdienstleister-Servers,
g') Aussendung einer Bestätigungsbericht zur Freigabe der Zahlung an das Händlergerät über das Internet
h') Weiterleiten der Bestätigungsnachricht vom Händlergerät an das Kundengerät über die alternative Drahtlosverbindung.

15. Datenübertragungs- und -verarbeitungsverfahren zur Bezahlung einer Ware oder Leistung an einer Ladenkasse eines Händlers durch einen Kunden, wobei das Verfahren aufweist:
a) Bereitstellung von Bezahldaten eines Zahlungsvorganges in einem Arbeitsspeicher eines Händlergerätes, in Form eines standardisierten Datenaustauschformats im passiven Auslesemodus einer Nahfeld-Datenkommunikation, NFC, durch eine mit dem Arbeitsspeicher sowie einer Ausrüstung zur Nahfeld-Datenkommunikation zusammenwirkenden ersten Datenaustausch-Softwarekomponente im Händlergerät,
und Bereitstellung von zahlungsbezogenen Kundenidentifizierungsdaten durch eine mobile App in einem Kundengerät,
b) aktives Auslesen der am Händlergerät bereitgestellten Bezahldaten und von Zugangsdaten des Händlergerätes für eine alternative Drahtlosverbindung durch eine mit einer Ausrüstung zur Nahfeld-Datenübertragung, NFC, des Kundengerätes zusammenwirkende zweite Datenaustausch-Softwarekomponente im Kundengerät,
b1) Verarbeitung der zahlungsbezogenen Kundenidentifizierungsdaten und der Bezahldaten durch eine mit der mobile App und der zweiten Datenaustausch-Softwarekomponente zusammenwirkende Verarbeitungseinrichtung
b2) Aufbau einer zur NFC Verbindung alternativen Drahtlosverbindung durch das Kundengerät mit dem Händlergerät unter Verwendung der Zugangsdaten des Händlergerätes und Übertragung der zahlungsbezogenen Kundenidentifizierungsdaten vom Kundengerät an das Händlergerät
b3) Erzeugung eines Bezahlauftragsdatensatzes aus den zahlungsbezogenen Kundenidentifizierungsdaten und den Bezahldaten,
b4) Zwischenspeicherung des Bezahlauftragsdatensatzes in einem Arbeitsspeicher des Händlergerätes,
c') aktive Übertragung des Bezahlauftragsdatensatzes durch das Händlergerät über das Internet an einen Zahlungsdienstleister-Server,
f") Empfang des Bezahlauftragsdatensatzes durch den Zahlungsdienstleister-Server und Prüfen der Zahlungsfreigabe mit Prüfmitteln des Zahlungsdienstleister-Servers,
g') Aussendung einer Bestätigungsbericht zur Freigabe der Zahlung an das Händlergerät über das Internet
h') Weiterleiten der Bestätigungsnachricht vom Händlergerät an das Kundengerät über die alternative Drahtlosverbindung.
